# EUROPEAN PATENT APPLICATION

(11) **EP 4 650 867 A1**
(43) Date of publication of application: **19.11.2025**
(21) Application number: 25161542.3
(22) Date of filing: 04.03.2025
(51) Int. Cl.: G02F 1/35, G02F 1/365

(54) **SYSTEM AND METHOD OF EFFICIENT OPTICAL FREQUENCY COMB GENERATION ON OPTICAL WAVEGUIDES**

(30) Priority: 17.05.2024 US 202418667083
(71) Applicant: Honeywell International Inc., Charlotte, NC 28202 (US)
(72) Inventor: PUCKETT, Matthew Wade, Charlotte, 28202 (US); HOYT, Chad, Charlotte, 28202 (US); NELSON, Karl, Charlotte, 28202 (US); WU, Jianfeng, Charlotte, 28202 (US)
(74) Representative: Ingrassia, Fisher & Lorenz UK Ltd.

(57) **Abstract**

An optical frequency comb generation system comprises an optical waveguide, which in turn comprises a length defining an elongated direction of the waveguide, and first and second reflector portions along the length and arranged to reflect light within the waveguide. A weak reflector portion is between the first and second reflector portions along the length of the waveguide and has a reflectivity less than the reflectivity of the first and second reflector portions. The weak reflector portion is arranged to shift wavelengths of resonances of light within the waveguide.

## Description

### STATEMENT REGARDING FEDERALLY SPONSORED RESEARCH OR DEVELOPMENT

This invention was made with Government support under HR0011-22-C-0018 awarded by DARPA. The Government has certain rights in the invention.

### TECHNICAL FIELD

The present application generally relates to optical frequency comb generation systems and more particularly relates to a system and method for generating optical frequency combs using an optical waveguide.

### BACKGROUND

An increasing number of integrated photonic applications are employing the use of optical frequency combs. An optical frequency comb has a periodic intensity profile in the time domain. This translates into a spectrum of evenly spaced narrow optical frequencies in the spectral or frequency domain. Optical frequency combs are used for precision frequency measurement, spectroscopy, timekeeping, metrology, and frequency synthesis to name a few examples.

An optical frequency comb generation system is typically configured to exhibit an anomalous dispersion to generate optical frequency combs. An anomalous dispersion has light wavelengths that shorten as the refractive index becomes larger, which is the opposite of normal dispersion. An anomalous dispersion occurs when the second derivative index of refraction with respect to a wavelength of a light beam has a negative value. This is often a challenging condition to satisfy in many integrated photonics platforms. In many cases, strict constraints are placed on optical waveguide platforms used to generate optical frequency combs to fulfil this condition. Such constraints may limit the ease with which optical frequency combs may be implemented in different applications.

Thus, a need exists for optical frequency comb generation systems that employ alternative techniques for reducing or eliminating the need for an anomalous dispersion to facilitate the generation of optical frequency combs.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

By one example implementation, an optical frequency comb generation system includes an optical waveguide comprising: a length defining an elongated direction of the waveguide, first and second reflector portions along the length and arranged to reflect light within the waveguide, and a weak reflector portion between the first and second reflector portions along the length of the waveguide and having a reflectivity less than the reflectivity of the first and second reflector portions. The weak reflector portion is arranged to shift wavelengths of resonance of light within the waveguide.

By another example implementation, an example optical device includes an optical device that includes an optical waveguide with a length defining an elongated direction of the waveguide and an optical resonator, the optical resonator comprising: first and second reflector portions along the length and arranged to reflect light within the waveguide, and a weak grating between the first and second reflector portions along the length of the waveguide and having a reflectivity less than the reflectivity of the first and second reflector portions. The weak grating is arranged to shift wavelengths of resonances of light within the waveguide.

Yet another example implementation has a method of generating an optical frequency comb. The method includes receiving light at a first reflector portion along a waveguide of a light resonator; and reflecting the light at the first reflector portion, comprising dividing the light into multiple light beams with different resonant wavelengths. The first reflector portion has a first reflectivity. The method also includes receiving reflected light from the first reflector portion at a weak reflector portion. The weak reflector portion is arranged to shift wavelengths of the resonance of the reflected light and has a weak reflectivity less than the first reflectivity. The method includes reflecting light with shifted resonance wavelengths received from the weak reflector portion at a second reflector portion having a second reflectivity greater than the weak reflectivity, and generating an optical frequency comb by using the light with the shifted resonance wavelengths.

Furthermore, other desirable features and characteristics of the system and method for generating optical frequency combs as described herein will become apparent from the subsequent detailed description and the appended claims, taken in conjunction with the accompanying drawings and the preceding background.

### BRIEF DESCRIPTION OF THE DRAWINGS

The detailed description of the present application will hereinafter be described in conjunction with the following drawing figures, wherein like numerals denote like elements and the drawings are not to scale, and wherein:
FIG. 1 is a schematic diagram of an example optical frequency comb generation system according to at least one of the implementations herein;
FIG. 2 is a graph showing example resonance shifts on a free spectral range of a resonator transmission according to at least one of the implementations herein;
FIG. 3 is a graph showing an example platicon spectrum generated while forming an optical frequency comb according to at least one of the implementations herein;
FIG. 4 is a graph showing an example platicon profile generated while forming an optical frequency comb according to at least one of the implementations herein; and
FIG. 5 is a flowchart of an example method of generating an optical frequency comb according to at least one of the implementations herein.

### DETAILED DESCRIPTION

All of the implementations described herein are example implementations provided to enable persons skilled in the art to make or use the disclosed methods, systems, and devices and not to limit the scope of the claims. Furthermore, no intention exists to be bound by any expressed or implied theory presented in the preceding technical field, background, brief summary, or the following detailed description.

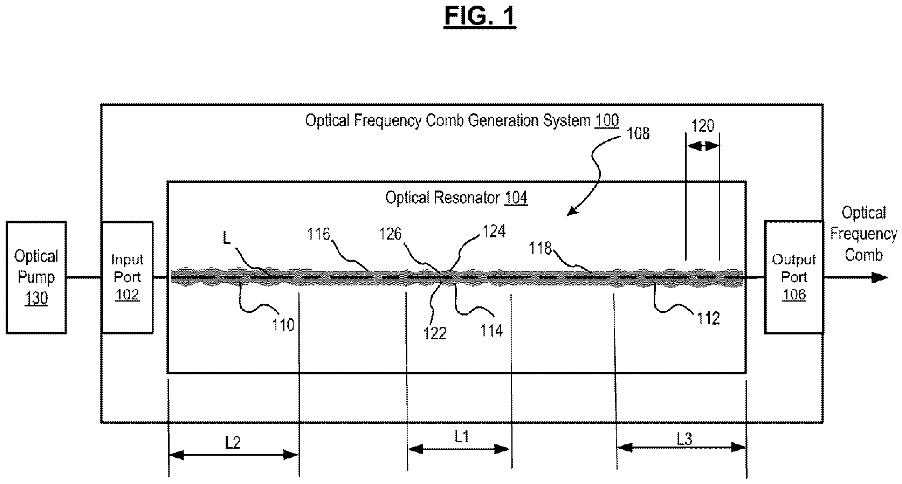

Referring to FIG. 1, an example optical frequency comb generation system 100 efficiently provides good quality optical frequency combs by using a weak reflector portion on a waveguide resonator between two stronger reflector portions. This arrangement creates an anomalous dispersion effect by obtaining resonance at a full range of desired resonance frequencies without limitation by a magnitude of normal dispersion, and while maintaining a power enhancement ratio of the resonator.

In detail, the system 100 includes an input port 102 that receives input light from a light pump 130, an optical resonator 104, and an output port 106. The optical resonator 104 is coupled to the input port 102 and to the output port 106. The optical resonator 104 includes an optical waveguide 108. In an example, the optical frequency comb generation system 100 is embodied on a semiconductor chip or other integrated circuit structure or package.

The optical waveguide 108 includes a first reflector portion 110, a second reflector portion 112, and a weak reflector portion 114 between the first and second reflector portions 110 and 112. A first uniform optical waveguide portion 116 is between the first reflector portion 110 and the weak reflector portion 114, while a second uniform optical waveguide portion 118 is between the weak reflector portion 114 and the second reflector portion 112. The uniform optical waveguide portions (or just uniform portions or propagation portions) 116 and 118 have uniform widths, or in other words, have no gratings.

In this example, the first reflector portion 110 is an input reflector portion that is disposed at one end of the first uniform optical waveguide portion 116 and is coupled to the input port 102. The second reflector portion 112 is an output reflector portion that is disposed at an end of the second uniform optical waveguide portion 118 and is coupled to the output port 106. It will be understood, however, that other arrangements are contemplated including when other waveguide components, such as uniform-width waveguide sections, are between the first and/or second reflector portions and the ends of the optical resonator 104. Likewise, waveguide components may be placed between the ends of the optical resonator and the input and/or output ports on the system 100.

By one option, an alternative omits the first and second uniform optical waveguide portions 116 and 118 so that first and second reflector portions 110 and 112 couple directly to weak reflector portion 114.

The first and second reflector portions 110 and 112 may have a number of different reflective structures as long as the reflectivity of the first and second reflector portions 110 and 112 is greater than the reflectivity of the weak reflector portion 114 by a minimum amount described below. Thus, by one example form, the first and second reflector portions 110 and 112 have loop mirrors to reflect light within the waveguide 108.

By an alternative described herein, however, the first and second reflector portions 110 and 112 may cooperatively form a Bragg resonator such that both the first and second reflector portions 110 and 112 have Bragg gratings. The Bragg gratings may be chirped to include a plurality of periodic variations from grating groove to groove (or a single peak between two valleys), where each of the periodic variations is associated with a refractive index n. In an implementation, the Bragg gratings on one or both reflector portions 110 and 112 have a non-uniform chirp rate of the plurality of periodic variations, where the chirp rate is either the same or different on the two reflector portions 110 and 112. In an example, the first reflector portion 110 has a chirped Bragg grating with a non-linear chirp rate (also referred to as a "bowing" chirp rate) and the second reflector portion 112 has a chirped Bragg grating with a linear chirp rate.

In a different implementation, the Bragg gratings on one or both of the first and second reflector portions 110 and 112 have a constant chirp rate that is the same or different on the two reflector portions 110 and 112. Thus, by one example, the first and/or second chirped Bragg gratings 110, 112 has an increasing period as it moves away from a center of the optical resonator 104 defined by the first and second chirped Bragg gratings 110, 112, and the one of the reflector portions 110 or 112 has a slower chirp rate than the other one of the first and second reflector portions 110 or 112. By one form, one of the first and second reflector portions creates normal dispersion and the other creates anomalous dispersion, although as explained below for one form, the type of effective dispersion of the resonator (normal or anomalous) is no longer of high importance to create the comb. While the chirped Bragg gratings of the reflector portions 110 and 112 are shown as having 4-5 periodic variations, in alternative examples, a fewer or greater number of periodic variations may be present. Also, while one example of first and second chirp rates are shown, in alternative examples, the chirped Bragg grating or any grating of the reflector portions 110 and 112 may have different chirp rates. By yet other alternatives, one of the reflector portions 110 or 112 may have a loop mirror and the other reflector portion 110 or 112 has gratings. Many other variations are contemplated.

By one example alternative approach, the two reflector portions 110 and 112 have periodic variations of the gratings in corresponding order such that a left-most periodic variation on both reflector portions 110 and 112 have the same reflective index n and resonance frequency, and this is the same for each corresponding pair of the periodic variations on the two reflector portions 110 and 112. This arrangement promotes formation of cavities of different wavelengths, also referred to as different light beams herein, from one reflector portion to the other so that each cavity reflects at a different point along the waveguide 108. Cavities are discussed further below with the operation of the resonator 104.

By one form, no matter the structure the structure of the weak reflector portion114, the weak reflector portion 114 has a reflectivity that is less than the reflectivity of the first and second reflector portion 110 and 112, which causes resonance shifting in the waveguide 108 rather than, or in addition to, resonance splitting.

Specifically, the weak reflector portion 114 enables resonance shifting that results in greater constructive interference compared to the Bragg resonator alone and other resonance splitting resonators. This arrangement within the waveguide 108 maintains a high power enhancement ratio generally even with that of high ratio resonators that usually perform better than Bragg resonators. Resonance shifting refers to a change in the resonance frequency or wavelength of an individual resonant mode on the resonator. The resonance shift can be either to lower or shorten a wavelength (a blueshift) or to raise or lengthen a wavelength (redshift). Instead, resonance splitting refers to the creation of more resonant modes. The shifting is accomplished by using the weak reflector to shift resonances, and specifically shifting the wavelengths (and frequencies) of the resonances from resonance wavelengths that would occur along a free spectral range (FSR) of a resonator with the same arrangement as described herein except without a weak reflector portion. The shifting allows resonances to have wavelengths that are desired on, and result in, generation of a range of frequencies of the optical frequency comb.

The shifting of resonances at the weak reflector portion 114 has an anomalous dispersion effect. In other words, since the weak reflector portion 114 creates resonance wavelengths to be used on the comb due to tuning of the input light, a certain type of dispersion is no longer needed to control round-trip lengths of the light, and in turn the light wavelengths within the resonator 104 that generate the optical frequency comb, such that magnitude of normal dispersion is no longer a significant concern for arranging the FSR.

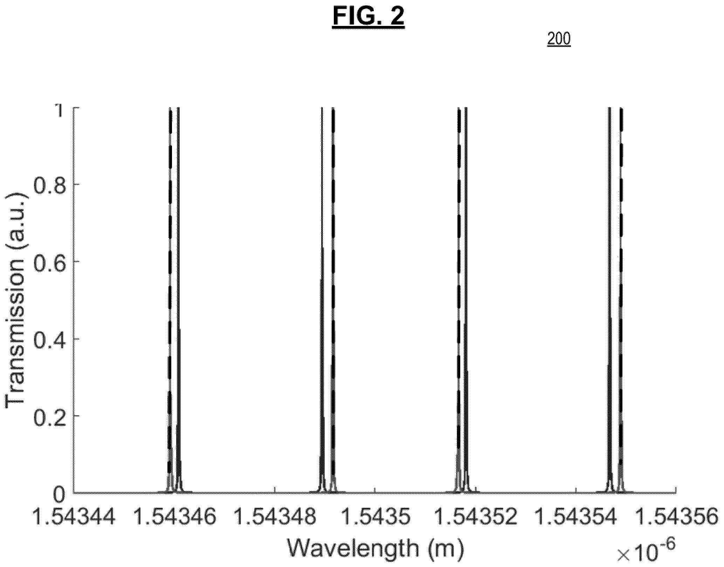

Referring to FIG. 2, a graph 200 shows resonance shifting as a result of the use of the weak reflector portion 114 on resonator 104. Graph 200 compares profiles of resonator transmissions as arbitrary units (a.u.) versus wavelength thereby representing the FSRs of the resonator where each peak is at a resonance wavelength. The simple solid peaks are resonance wavelengths of a transmission profile from a resonator without the weak reflector portion, while the peaks emphasized by dash lines indicate a shifted resonance on a resonator 104 caused by the weak reflector portion 114. As shown, and by one example form, the weak reflector portion 114 results in alternating shift directions (lower and higher resonance wavelengths relative to the resonance without the weak reflector portion) where each consecutive pair of resonant wavelengths or resonant modes has shifts in two different directions. The alternating shifts provide a predictable pattern so that input light can be tuned to cause a shift in a particular direction at a certain resonance mode.

The reflectivity of the weak reflector portion can be described as a percentage of the FSR. This refers to a reflectivity value that is relative to spacing between adjacent resonance wavelengths (or resonance modes) within the optical resonator. The FSR represents the separation in frequency (or wavelength) between adjacent resonant modes. Mathematically, the FSR depends on the inverse of the round-trip time of light within the resonator and the group index (ng) of the resonator.

By one form, when reflectivity is expressed as a percentage of the FSR, this refers to a normalized reflectivity value that is normalized by the FSR. Thus, for example, a resonator with an FSR of 100 GHz has resonant modes spaced apart by 100 GHz in frequency. Also, a reflectivity of 50% of the FSR at the weak reflector portion 114 at a certain frequency is 50% of the reflectivity at a neighboring resonance. In other words, if a reflector has 90% reflectivity at one resonance frequency, at a neighboring resonance frequency spaced by the FSR, the reflectivity would be 45% (assuming it follows the same FSR profile pattern). This is because a cavity supports multiple resonant modes, and the reflectivity is distributed among these modes according to the resonator's characteristics.

By one form, the reflectivity of the weak reflector portion is equal to or less than 3%, 2%, or even 1% of an FSR of the waveguide or resonator. By another form, the reflectivity of the weak reflector portion is equal to or less than 30% or 50% (or 30% to 50%) of the FSR of the waveguide or resonator. In any of these cases, the reflectivity of the first and second reflector portions 110 and 112 is higher than that of the weak reflector portion 114, and in some forms, significantly higher, such as over 90%, or 95% to 98% or more of the FSR of the resonator. Thus, by one form, the reflectivity of the first and second reflector portions 110 and 112 is up to about 50 times greater than the reflectivity of the weak reflector portion 114. By other forms, the reflectivity of the first and second reflector portions 110 and 112 is at least 1.8 times greater than the reflectivity of the weak reflector portion 114.

By one example, the input or first reflector portion 110 that receives the light from the pump 130 more directly than the second reflector portion 112 has less reflectivity than the output or second reflector portion 112. Thus, while the reflectivity of the output reflector portion 112 is as close to 100% as possible, the reflectivity of the input reflector portion 110 may be lower such as at 95 to 98%, as one example. This arrangement provides more critically coupled light in the waveguide where the ratio of light entering the resonator matches the round-trip loss. Specifically, the reduction of reflectivity at the input reflector portion to reduce round-trip or propagation loss establishes critical coupling, and therefore results in enhancement of circulating optical power and narrower resonance wavelengths for more efficient non-linear effects that produce the optical frequency comb as described herein.

Also with regard to the weak reflector portion 114, the weak reflector portion 114 may have different alternative reflective structures. By one example, the weak reflector portion 114 has or is a weak loop mirror, while one or both reflector portions 110 and 112 have loop mirrors or gratings as described above. The reflectivity can be controlled by changing the dimensions of the loop, using phase shifters, certain materials, and so forth.

By another alternative, the weak reflector portion 114 has or is a weak grating, while one or both reflector portions 110 and 112 have loop mirrors or gratings as described above. When the weak reflector portion 114 has weak gratings, weak reflector portion 114 has a grating 122 with a depth (or amplitude modulation) between peaks 124 and valleys 126 that form the grooves on the grating 122 and is smaller than a similar amplitude modulation of gratings on the first and second reflector portions 110 and 112. Otherwise, instead or additionally, the weak reflector portion 114 may have a length L1 that is shorter along the length L of the waveguide 108 than lengths L2 and L3 of the first and second reflector portions 110 and 112, respectively. It will be understood that length L is defined by an elongated direction of the waveguide 108 and that the length or direction can be completely linear, partly linear, or not linear (completely or substantially curved).

By another approach, it also is desirable to generate a platicon waveform in the waveguide 108. Resonators, such as Bragg resonators, used to generate optical frequency combs often establish multi-soliton states that have a significant amount of uncorrelated solitons that result in uncorrelated phase noise. Certain applications, such as radio frequency (RF) applications, cannot operate well or at all with these noisy conditions. It can be very challenging, however, to establish a single soliton state.

The use of the platicon has several distinct advantages such as being deterministic and therefore much easier to establish than a single soliton state. The platicon can be established by gradual tuning of the resonance wavelength or resonance frequency by adjusting a circulating electrical field at the pump and the light wavelengths.

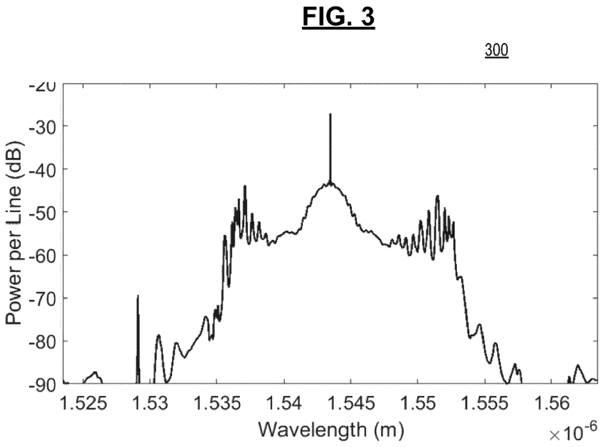

Referring to FIG. 3, the tuning can be performed until a platicon spectrum is established as shown on graph 300. Graph 300 shows a platicon spectrum with electrical current (or power) loss values graphed over wavelength of the light from the pump and while using a 50mW pump.

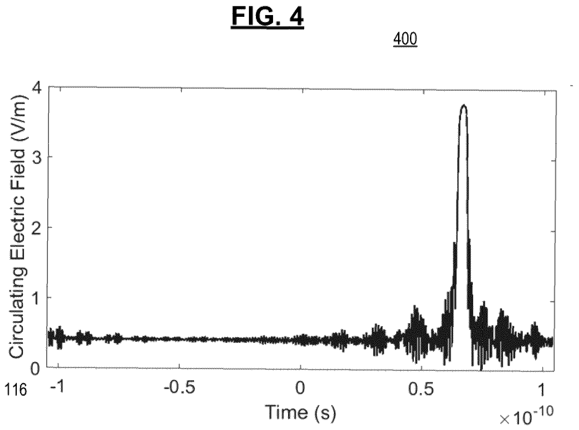

Referring to FIG. 4, the present methods and systems generate a platicon (or dark soliton) waveform as mentioned. The graph 400 shows a platicon pulse profile formed with electrical current loss (from a circulating electrical field (volts/meter)) graphed by time. Specifically for the tuning, the time domain profile of the platicon changes as the wavelength of the pump changes as shown in graph 300. The platicon profile starts with a narrow profile and grows broader as the wavelength comes closer to that of a resonance frequency. The profile vanishes once the wavelength is larger than the resonance wavelength.

Another advantage of the platicon in comparison to a soliton is that the platicon generates more input optical power (for example, energy/time) from the pump 130 and outputs a lot more optical power in each comb line of a resulting optical frequency comb.

In operation, the optical frequency comb generation system 100 is arranged to receive an input light beam having a specific wavelength and generate a specific configuration of an optical frequency comb. The optical pump 130 is coupled to the input port 102 and is tuned to generate an input light beam having a single optical frequency, such as 1550 nanometers as one example, and that is specifically tuned to the optical frequency comb generation system 100. The optical resonator 104 is configured to receive the input light beam and generate a plurality of equally spaced light beams within the resonator, where each light beam has a different wavelength, in the form of an optical frequency comb. The optical frequency comb includes the plurality of light beams, and by one example form, including a light beam having a wavelength corresponding to, or shifted from, the input light beam.

The configuration of the optical frequency comb is based on the configuration of the first and second reflector portions 110 and 112, and the weak reflector portion 114. As one example structure herein, the first and second reflector portions 110 and 112, as mentioned above, both may be chirped Bragg gratings with periodic variations to generate multiple light beams of multiple cavities by one example, and while the weak reflector has gratings or other structure to shift the resonant wavelengths of the light beams to wavelengths that generate an optical frequency comb. With this arrangement, the resonator 104 will generate a comb with a much wider range of input wavelengths by the pump. By one example form, the input wavelength at the pump 130 is not significant if the weak reflector portion 114 can shift the resonances to the desired wavelengths for comb generation. This arrangement also results in a reduction or elimination for the need of the anomalous dispersion.

By one example form, the wavelength of each of the plurality of light beams generated in the optical frequency comb may correspond to a resonant frequency of one of a plurality of cavities formed in the optical waveguide 108 by the Bragg gratings. The input light beam has a wavelength that corresponds to an initial resonant frequency of one of the cavities that is subsequently shifted by the weak reflector portion 114. Each of the other light beams in the optical frequency comb have wavelengths that correspond to a shifted resonant frequency of one of the other cavities. The output port 106 is configured to transmit the optical frequency comb generated by the optical resonator 104.

Continuing the example with the cavities, when each of the light beams is generated by the optical waveguide 108, a portion of each of the generated light beams will be reflected between the two periodic variations of the two chirped Bragg gratings 110, 112 and through the weak reflector portion 114, and a portion of each of the generated light beams will be transmitted through the second chirped Bragg grating 112 to form the optical frequency comb that includes each of the light beams generated by the optical waveguide 108. The transmitted power associated with the portion of the light beam transmitted through the second chirped Bragg grating 112 is dependent on the wavelength of that light beam.

The optical waveguide 108 will generate an optical frequency comb that includes the portions of the light beams each with a different resonance frequency and that were transmitted through the weak reflector portion 114 and the second reflector portion (or here chirped Bragg grating) 112 in accordance with the transmitted power associated with each of the light beams. The proper tuning of the optical pump 130 to correspond to the specific configuration of the optical waveguide 108, along with the resonant shifting and platicon creation of the weak reflector portion 114, will further minimize energy losses associated with the optical frequency comb generation process.

By one example optional form with the gratings, the optical waveguide 108 is configured to implement a technique known as phase compensation. Phase compensation is an effect in which different wavelengths of light exhibit different phase shifts upon reflection from or transmission through an optical element. This effect can be used to narrow optical pulses or facilitate wave mixing. By one example mentioned above, the optical resonator 104 is formed in an integrated photonics platform in which optical cavities are formed between the first and second chirped Bragg gratings 110, 112 and through the weak reflector portion 114.

The techniques described herein with resonance shifting by a weak reflector portion may enable an optical frequency comb to be formed in any platform of interest, with any, or almost any, input wavelength, provided this technique exhibits a sufficiently low propagation loss.

While one configuration of an optical frequency comb generation system 100 has been described, alternative examples may include additional components that facilitate operation of the optical frequency comb generation system 100.

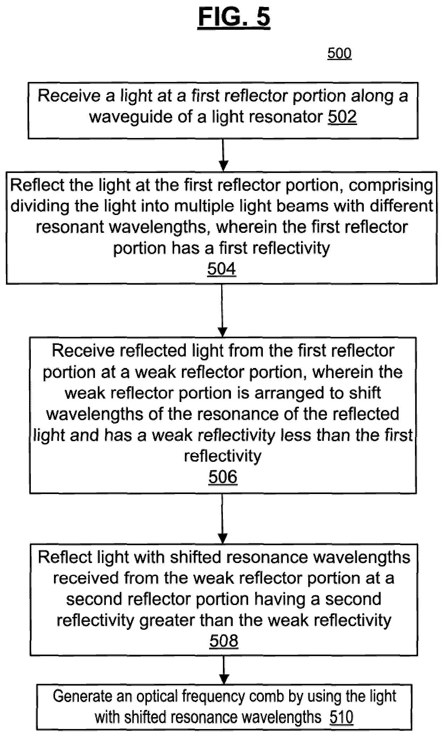

Referring to FIG. 5, an example process 500 of efficient optical frequency comb generation is operated according to one or more implementations described herein, and includes operations 502 to 510 numbered evenly. The description of process 500 refers to any of the devices or systems of FIGS. 1-4 herein, and where relevant.

Process 500 may include "receive light at a first reflector portion along a waveguide of a light resonator" 502. Thus, a pump of the resonator may provide a single input light beam or input light with a single resonant frequency or wavelength by one example. The pump may have the input light tuned to both generate resonance wavelength shifts of precise amounts at the weak reflector portion and to generate a platicon waveform as described above.

Process 500 may include "reflect the light at the first reflector portion comprising dividing the light into multiple light beams with different resonant wavelengths, wherein the first reflector portion has a first reflectivity" 504. Thus, the input light beam is divided into multiple light beams each with a different resonant frequency by the first reflector. This generates a range of initial resonant frequencies including a low frequency and high frequency for the multiple light beams. However, the magnitude of the normal dispersion is no longer a significant concern with regard to a high and low resonant frequency because the resonant wavelengths will be shifted to resonant frequencies that will form a comb by the weak reflector anyway.

Specifically, process 500 may include "receive reflected light from the first reflector portion at a weak reflector portion, wherein the weak reflector portion is arranged to shift wavelengths of the resonance of the reflected light and has a weak reflectivity less than the first reflectivity" 506, so that the resonator 104 will generate a comb with a much wider range of input wavelengths by the pump. By one example form, the input wavelength at the pump 130 is not significant as long as the weak reflector portion 114 can shift the resonances to the wavelengths that will create a comb at the second reflector portion 112. The pump can be tuned to adjust the resonance shifts to generate the comb. By one form, the weak reflector portion creates the weaker reflectivity by having a smaller amplitude modulation depth and/or by having a short length than that of the first (or input) reflector portion and second (or output) reflector portion, as two example structures.

Also, as mentioned, while process 500 discusses light propagating and reflecting through the wave guide in a single direction, more precisely, the light in the resonator or waveguide is mixed by a round trip with the light alternating back and forth between the first and second reflector portions and through the weak reflector portion, and in turn propagating between each of the reflectors at the uniform or propagation portions, The round-trips of the light increases constructive interference, and in turn the optical power provided to the comb to increase the quality of the comb.

Process 500 may include "reflect light with shifted resonance wavelengths received from the weak reflector portion at a second reflector portion having a second reflectivity greater than the weak reflectivity" 508. By one alternative form, the second reflector portion also has a reflectivity higher than the reflectivity of the first reflector portion to minimize propagation losses of light from the first reflector portion.

Process 500 may include "generate an optical frequency comb by using the light with the shifted resonance wavelengths" 510. As a result, the optical frequency comb includes multiple light beams each with a different resonant frequency or wavelength.

In an example, the optical frequency comb generation system 100 is configured to be coupled to a high-speed detector (not shown). In an example, the output port 106 of the optical frequency comb detection system 100 is configured to be coupled to the high-speed detector. The high-speed detection receives the optical frequency comb generated by the optical frequency comb generation system 100 as an input and generates a radio frequency (RF) signal including a plurality of electrical signals. Each of the plurality of electrical signals in the RF signal corresponds to a wavelength of one of the plurality of light beams in the optical frequency comb.

In this example, the process 500 may include additional steps that facilitate operation of the optical frequency comb generation system 100.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined herein. The sequence of the text in any of the claims does not imply that process steps must be performed in a temporal or logical order according to such sequence unless it is specifically defined by the language of the claim. The process operations may be interchanged in any order if such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one example implementation has been presented in the foregoing detailed description, it should be appreciated that a vast number of variations exist. It also should be appreciated that the exemplary implementation or exemplary implementations are only examples, and are not intended to limit the scope, applicability, or configuration of the disclosed methods, systems, and devices in any way. Rather, the foregoing detailed description will provide those skilled in the art with a convenient road map for implementing an example implementation of the disclosed methods, systems, or devices. It being understood that various changes may be made in the function and arrangement of elements described in an example implementation without departing from the scope of the appended claims.

## Claims

1. An optical frequency comb generation system, comprising:
an optical waveguide comprising:
a length defining an elongated direction of the waveguide,
first and second reflector portions along the length and arranged to reflect light within the waveguide, and
a weak reflector portion between the first and second reflector portions along the length of the waveguide and having a reflectivity less than the reflectivity of the first and second reflector portions, wherein the weak reflector portion is arranged to shift wavelengths of resonance of light within the waveguide.

2. The system of claim 1, wherein the weak reflector portion is arranged to shift the wavelengths of the resonances by both increasing and decreasing the resonant wavelengths of the resonance depending, at least in part, on initial wavelengths on an initial free spectral range.

3. The system of claim 1, wherein the weak reflector portion is arranged to shift the wavelengths of the resonances in alternating directions along a free spectral range of wavelengths of the waveguide.

4. The system of claim 1, wherein the weak reflector portion is arranged to shift the wavelengths of the resonances in alternating directions at consecutive initial wavelength resonances on a free spectral range.

5. The system of claim 1, comprising first and second uniform waveguide portions with uniform widths, wherein the first uniform waveguide portion is between the first reflector portion and the weak reflector portion along the length, and
wherein the second uniform waveguide portion is between the weak reflector portion and the second reflector portion along the length.

6. The system of claim 1, wherein the first and second reflector portions each have a reflectivity greater than 30% to 50% of a free spectral range of the waveguide, and wherein the weak grating has a reflectivity equal to or less than 30% to 50% of the free spectral range.

7. The system of claim 6, wherein the weak grating has a reflectivity less than two percent of the free spectral range.

8. The system of claim 6, wherein the proportion of reflectivity of the free spectral range at the weak reflector portion is a multiple of a wavelength change of the resonance shifts.

9. The system of claim 1, wherein the weak reflector portion is a grating or loop mirror.

10. A method of generating an optical frequency comb, comprising:
receiving light at a first reflector portion along a waveguide of a light resonator;
reflecting the light at the first reflector portion, comprising dividing the light into multiple light beams with different resonant wavelengths, wherein the first reflector portion has a first reflectivity;
receiving reflected light from the first reflector portion at a weak reflector portion, wherein the weak reflector portion is arranged to shift wavelengths of the resonance of the reflected light and has a weak reflectivity less than the first reflectivity;
reflecting light with shifted resonance wavelengths received from the weak reflector portion at a second reflector portion having a second reflectivity greater than the weak reflectivity; and
generating an optical frequency comb by using the light with the shifted resonance wavelengths.

11. The method of claim 10, comprising wherein the first reflector portion has less reflectivity than the second reflector portion.

12. The method of claim 10, comprising tuning light input to the first reflector portion to generate a platicon light waveform.
